# EUROPÄISCHE PATENTANMELDUNG

(11) **EP 3 462 143 A1**
(43) Veröffentlichungstag der Anmeldung: **03.04.2019**
(21) Anmeldenummer: 17194411.9
(22) Anmeldetag: 02.10.2017
(51) Int. Cl.: G01F 23/288, G01N 23/02, G01T 1/20, G01N 9/24

(54) **RADIOMETRISCHES MESSGERÄT UND RADIOMETRISCHES MESSSYSTEM**

(71) Anmelder: Berthold Technologies GmbH & Co. KG, 75323 Bad Wildbad (DE)
(72) Erfinder: MÖRMANN, Dirk, 76593 Gernsbach (DE)
(74) Vertreter: Patentanwälte Ruff, Wilhelm, Beier, Dauster & Partner mbB

(57) **Zusammenfassung**

Radiometrisches Messgerät (2) zum Messen einer Eigenschaft (MW) einer Substanz (51), wobei die Substanz (51) in einem Hohlkörper (50) enthalten ist, das radiometrische Messgerät (2) aufweisend:
- ein Bündel (3) einer Mehrzahl von Szintillatorfasern (4), wobei das Bündel (3) zur längsverlaufenden Anordnung der Szintillatorfasern (4) entlang des Hohlkörpers (50) ausgebildet ist,
- eine Mehrzahl von optoelektronischen Sensoren (10), wobei die optoelektronischen Sensoren (10) mit zugehörigen Szintillatorfasern (4) des Bündels (3) optisch gekoppelt sind und dazu ausgebildet sind, einen von der optisch gekoppelten Szintillatorfaser (4) erzeugten Lichtimpuls (LI) in ein zugehöriges elektrisches Sensorsignal (Sa, Sb, Sc) umzuwandeln, und
- eine Auswerteeinheit (20), wobei die Auswerteeinheit (20) mit den optoelektronischen Sensoren (10) elektrisch gekoppelt ist und dazu ausgebildet ist, die Sensorsignale (Sa, Sb, Sc) oder aus diesen weiterverarbeitete Signale zu einem Summensignal (SUM) aufzusummieren und basierend auf dem Summensignal (SUM) die Eigenschaft (MW) zu bestimmen.

## Beschreibung

### ANWENDUNGSGEBIET UND STAND DER TECHNIK

Die Erfindung bezieht sich auf ein radiometrisches Messgerät zum Messen einer Eigenschaft einer Substanz, wobei die Substanz in einem Hohlkörper enthalten ist, und ein radiometrisches Messsystem mit einem solchen radiometrischen Messgerät.

In der Prozessmesstechnik werden zur Messung einer Eigenschaft einer Substanz beispielsweise in Form eines Füllstands, einer Position einer Grenzschicht, einer Feuchte, einer Dichte und/oder eines Massenstroms, etc. radiometrische Messgeräte verwendet, die Szintillatoren und optoelektronische Sensoren zur Strahlungsmessung aufweisen. Die Szintillatoren und optoelektronischen Sensoren dienen beispielsweise zur Bestimmung einer Energie und/oder der Intensität von ionisierender Strahlung, wobei die Energie und/oder die Intensität der ionisierenden Strahlung von der Eigenschaft der Substanz abhängen/abhängt.

### AUFGABE UND LÖSUNG

Der Erfindung liegt als Aufgabe die Bereitstellung eines radiometrischen Messgeräts zugrunde, das gegenüber dem Stand der Technik verbesserte Eigenschaften aufweist, insbesondere einfach zu transportieren und zu montieren ist und gleichzeitig eine hohe Messempfindlichkeit und einen langen Messbereich aufweist. Des Weiteren liegt der Erfindung als Aufgabe die Bereitstellung eines radiometrischen Messsystems mit einem solchen radiometrischen Messgerät zugrunde.

Die Erfindung löst diese Aufgabe durch die Bereitstellung eines radiometrischen Messgeräts mit den Merkmalen des Anspruchs 1. Des Weiteren wird die der Erfindung zugrundeliegende Aufgabe durch ein radiometrisches Messsystem mit den Merkmalen des Anspruchs 15 gelöst. Vorteilhafte Weiterbildungen und/oder Ausgestaltungen der Erfindung sind in den abhängigen Ansprüchen beschrieben.

Das erfindungsgemäße radiometrische Messgerät zum Messen einer Eigenschaft einer Substanz, wobei die Substanz in einem Hohlkörper enthalten ist, weist auf: ein Bündel einer Mehrzahl von Szintillatorfasern, eine Mehrzahl von optoelektronischen Sensoren und eine Auswerteeinheit. Das Bündel ist zur längsverlaufenden, insbesondere geraden oder ausgestreckten, Anordnung der Szintillatorfasern entlang des Hohlkörpers ausgebildet. Die optoelektronischen Sensoren sind mit zugehörigen Szintillatorfasern des Bündels optisch gekoppelt und, insbesondere jeweils, dazu ausgebildet, einen von der optisch gekoppelten Szintillatorfaser erzeugten Lichtimpuls in ein zugehöriges elektrisches Sensorsignal umzuwandeln. Die Auswerteeinheit ist mit den optoelektronischen Sensoren elektrisch gekoppelt und dazu ausgebildet, die Sensorsignale oder aus diesen weiterverarbeitete Signale zu einem Summensignal, insbesondere einem Summensensorsignal, aufzusummieren und basierend auf dem Summensignal die Eigenschaft zu bestimmen.

Das radiometrische Messgerät ermöglicht einen relativ einfach Transport und eine relativ einfache Montage an dem Hohlkörper, insbesondere im Vergleich zu einem Messgerät mit einem Szintillatorstab. Das Bündel beziehungsweise seine Szintillatorfasern kann/können flexibel sein und somit beim Transport aufgewickelt sein, insbesondere mit einem Wickelradius von maximal 100 Zentimeter (cm), insbesondere maximal 50 cm, insbesondere maximal 20 cm, insbesondere maximal 10 cm. Des Weiteren kann/können das Bündel beziehungsweise seine Szintillatorfasern bei der Montage abgewickelt sein und/oder an eine möglicherweise relativ komplexe Geometrie des Hohlkörpers angepasst werden. Dabei ermöglicht die Mehrzahl von Szintillatorfasern ein Szintillationsvolumen pro Messbereichslänge, welches gegenüber dem eines Szintillatorstabs nicht kleiner zu sein braucht. Jedoch führt eine gegenüber einem Szintillatorstab relativ kleinere Querschnittsfläche jeder der Szintillatorfasern in der Regel dazu, dass im Messbetrieb die Mehrzahl von Szintillatorfasern relativ weniger Lichtimpulse, insbesondere an einem jeweiligen Ende, bereitstellt als ein Szintillatorstab - auch bei gleichem Szintillationsvolumen pro Messbereichslänge. Eine relativ hohe Messempfindlichkeit ist aber durch die Mehrzahl von optoelektronischen Sensoren ermöglicht. Ein Rauschen und/oder eine Totzeit eines jeden Sensors fallen/fällt aufgrund der Mehrzahl von Sensoren nicht so sehr ins Gewicht. Die Messempfindlichkeit lässt sich über die Mehrzahl der Szintillatorfasern und/oder die Mehrzahl der Sensoren bestimmen. Je mehr Szintillatorfasern und/oder Sensoren, desto empfindlicher ist das radiometrische Messgerät. Somit lassen sich Messempfindlichkeit und Kosten an die Messapplikation anpassen. Die längsverlaufende Anordnung der, insbesondere montierten, Szintillatorfasern ermöglicht einen relativ langen Messbereich.

Insbesondere kann jede der Szintillatorfasern einzeln längsverlaufen, insbesondere gerade. Weiter können die Szintillatorfasern unterbrechungsfrei sein. Das radiometrische Messgerät kann nur ein einziges Bündel aufweisen. Bündel kann bedeuten, dass die Mehrzahl von Szintillatorfasern zu einer einzelnen Einheit zusammengeführt sein kann, insbesondere zu einer für den Benutzer handzuhabenden und/oder sichtbaren Einheit. In anderen Worten: die Szintillatorfasern brauchen nicht getrennt voneinander zu sein.

Die optoelektronischen Sensoren können mit zugehörigen Szintillatorfasern des Bündels an einem Ende einer jeweiligen der Szintillatorfasern optisch gekoppelt sein. Zugehörig kann bedeuten, dass einer der Sensoren mit einer, insbesondere nur einer einzigen, der Szintillatorfasern gekoppelt sein kann und ein anderer der Sensoren mit einer, insbesondere nur einer einzigen, anderen der Szintillatorfasern gekoppelt sein kann. Insbesondere kann die Mehrzahl von Szintillatorfasern der Mehrzahl von Sensoren entsprechen beziehungsweise dieser gleich sein. Das elektrische Sensorsignal kann ein analoges elektrisches Sensorsignal beispielsweise in Form eines Spannungspulses sein.

Die Auswerteeinheit kann die Eigenschaft bestimmen, beispielsweise indem eine Zählrate der Spannungspulse ausgewertet werden kann. Diese Zählrate kann beispielsweise abhängig von der Eigenschaft sein. Insoweit sei auch auf die einschlägige Fachliteratur zu den Messprinzipien radiometrischer Messgeräte verwiesen. Insbesondere kann die Auswerteeinheit einen Mikroprozessor aufweisen oder sein.

Der Hohlkörper kann als ein Behälter oder ein Container bezeichnet werden. Die Eigenschaft der Substanz kann ein Füllstand, eine Position einer Grenzschicht, eine Feuchte, eine Dichte und/oder ein Massenstrom sein.

In einer Weiterbildung der Erfindung ist das Bündel zur längsverlaufenden Anordnung der Szintillatorfasern entlang des Hohlkörpers über eine Länge von mindestens 1 Meter (m) ausgebildet, insbesondere von mindestens 2 m, insbesondere von mindestens 3 m, insbesondere von mindestens 4 m, insbesondere von mindestens 5 m, insbesondere von mindestens 6 m, insbesondere von mindestens 7 m. Dies ermöglicht einen besonders langen Messbereich. Insbesondere kann jede der Szintillatorfasern einzeln über eine Länge von mindestens 1 m verlaufen.

In einer Weiterbildung der Erfindung sind die optoelektronischen Sensoren, insbesondere jeweils, dazu ausgebildet, den von der optisch gekoppelten Szintillatorfaser erzeugten Lichtimpuls in ein zugehöriges digitales elektrisches Sensorsignal umzuwandeln. Insbesondere kann das digitale elektrische Sensorsignal eine Zählrate sein. Die Auswerteeinheit kann die digitalen Sensorsignale oder aus diesen weiterverarbeitete Signale digital aufsummieren, insbesondere zu einer Gesamtzählrate. Der Sensor kann eine Sensorelektronik aufweisen. Die Sensorelektronik kann einen Verstärker, einen Shaper, einen Diskriminator und/oder einen Zähler aufweisen.

Einer, insbesondere mehrere, insbesondere alle, der optoelektronischen Sensoren kann/können jeweils nur einen einzige Photodiode aufweisen oder sein.

In einer Weiterbildung der Erfindung weist mindestens einer der optoelektronischen Sensoren ein Array von Photodioden auf. Eine Photodiode ermöglicht eine relativ kompakte Bauform, einer relativ hohe Robustheit, insbesondere gegenüber Stößen, eine relativ niedrige Versorgungsenergie, insbesondere Versorgungsspannung, eine relativ hohe Unempfindlichkeit gegen Magnetfelder, eine relativ hohe Quanteneffizienz und relativ günstige Kosten, insbesondere im Vergleich zu einem Photomultipliertube. Insbesondere kann die Photodiode eine Halbleiter-Photodiode sein, insbesondere eine Lawinen-Photodiode, insbesondere betrieben im Geiger-Modus. Das Array von Photodioden ermöglicht gegenüber einer einzelnen Photodiode ein relativ besseres Signal-Rausch-Verhältnis. Insbesondere kann das Array von Photodioden ein SiPM (Silicon Photomultiplier) sein. Insbesondere können mehrere, insbesondere alle, der Sensoren jeweils ein Array von Photodioden aufweisen.

In einer Weiterbildung der Erfindung weist mindestens eine der Szintillatorfasern eine Querschnittsfläche von maximal 5 Quadratmillimetern (mm²) aufweist, insbesondere maximal 2 mm², insbesondere maximal 1 mm². Dies ermöglicht eine relativ hohe Flexibilität der Szintillatorfaser. Insbesondere können mehrere, insbesondere alle, der Szintillatorfasern eine Querschnittsfläche von maximal 5 mm² aufweisen. Die Querschnittsfläche kann eine runde, insbesondere eine kreisrunde, oder eine eckige, insbesondere eine quadratische, Form aufweisen. Eine Querschnittsfläche eines zugehörigen optoelektronischen Sensors kann an die Querschnittsfläche der Szintillatorfaser angepasst sein, insbesondere dieser entsprechen oder gleichen.

In einer Weiterbildung der Erfindung weist mindestens eine der Szintillatorfasern Polyvinyltoluen (PVT) und/oder Polystyren (PS) auf. Polyvinyltoluen (PVT) und Polystyren (PS) sind jeweils ein Material für einen sogenannten Plastikszintillator. Insbesondere können mehrere, insbesondere alle, der Szintillatorfasern Polyvinyltoluen und/oder Polystyren aufweisen. Zusätzlich kann mindestens eine der Szintillatorfasern eine nicht-szintillierende Beschichtung aufweisen. Die Beschichtung kann derart ausgebildet sein, dass an einer Grenzfläche zwischen dem Szintillatormaterial und der Beschichtung Totalreflexion des Lichtimpulses in der Szintillatorfaser stattfindet. Dies ermöglicht eine bessere optische Leitung des Lichtimpulses zu einem Ende der Szintillatorfaser und/oder, dass ein optischer Cross-Talk zwischen den verschiedenen Szintillatorfaser nur in sehr geringem Maße oder nicht stattfindet.

In einer Weiterbildung der Erfindung weist das Bündel der Mehrzahl von Szintillatorfasern mindestens 50, insbesondere mindestens 100, insbesondere mindestens 200, insbesondere mindestens 300, insbesondere mindestens 400, Szintillatorfasern auf. Dies ermöglicht ein besonders hohes Szintillationsvolumen pro Messbereichslänge. Zusätzlich oder alternativ weist die Mehrzahl von optoelektronischen Sensoren mindestens 50, insbesondere mindestens 100, insbesondere mindestens 200, insbesondere mindestens 300, insbesondere mindestens 400, optoelektronische Sensoren auf. Dies ermöglicht eine besonders hohe Messempfindlichkeit.

In einer Weiterbildung der Erfindung ist jeder der optoelektronischen Sensoren mit nur einer einzigen der Szintillatorfasern des Bündels optisch gekoppelt. Zusätzlich oder alternativ kann jede der Szintillatorfasern mit nur einem einzigen der Sensoren gekoppelt sein.

In einer Weiterbildung der Erfindung ist mindestens einer der optoelektronischen Sensoren unmittelbar mit einer der Szintillatorfasern des Bündels optisch gekoppelt. Anders formuliert: der Sensor und die Szintillatorfaser können unmittelbar aneinander angrenzend angeordnet sein. Insbesondere können mehrere, insbesondere alle, der Sensoren jeweils unmittelbar mit einer der Szintillatorfasern gekoppelt sein.

In einer Weiterbildung der Erfindung weist das radiometrische Messgerät mindestens einen Lichtleiter auf. Einer der optoelektronischen Sensoren ist mittels des Lichtleiters mit einer der Szintillatorfasern des Bündels optisch gekoppelt. Dies ermöglicht den Sensor entfernt von der Szintillatorfaser anzuordnen. Insbesondere kann der Lichtleiter nicht-szintillierend ausgebildet sein. Des Weiteren kann ein Brechungsindex des Lichtleiters an einen Brechungsindex der Szintillatorfaser angepasst sein. Das radiometrische Messgerät kann eine Mehrzahl von Lichtleitern aufweisen. Mehrere, insbesondere alle, der Sensoren können jeweils mittels eines der Lichtleiter mit einer der Szintillatorfasern gekoppelt sein.

In einer Weiterbildung der Erfindung ist mindestens eine der Szintillatorfasern an einem Ende verspiegelt. Dies ermöglicht eine relativ höhere Lichtausbeute an einem anderen Ende der Szintillatorfaser. Insbesondere kann an dem anderen Ende der zugehörige optoelektronische Sensor mit der Szintillatorfaser optisch gekoppelt sein. Mehrere, insbesondere alle, der Szintillatorfasern können jeweils an einem Ende verspiegelt sein.

In einer Weiterbildung der Erfindung weist das radiometrische Messgerät mindestens ein mechanisches Bindeelement auf. Das mindestens eine mechanische Bindeelement bindet die Mehrzahl von Szintillatorfasern zu dem Bündel mechanisch zusammen. Insbesondere kann das Bindeelement ein Band, insbesondere ein Klebeband, ein Schlauch, insbesondere einen Schrumpfschlauch, und/oder ein Kabelbinder sein. Des Weiteren kann das Bindeelement für Strahlung transparent beziehungsweise durchlässig sein. Außerdem kann das Bindeelement derart ausgebildet sein, dass es sich kaum oder nicht auf eine Flexibilität des Bündels beziehungsweise seiner Szintillatorfasern auswirken kann.

In einer Weiterbildung der Erfindung weist die Auswerteeinheit eine Bewertungseinheit auf. Die Bewertungseinheit ist dazu ausgebildet, ein jeweiliges Sensorsignal oder ein daraus weiterverarbeitetes Signal als fehlerfrei oder fehlerhaft zu bewerten. Des Weiteren ist die Auswerteeinheit dazu ausgebildet, insbesondere nur, die fehlerfreien Sensorsignale oder aus diesen weiterverarbeitete fehlerfreie Signale zu dem Summensignal aufzusummieren und die Eigenschaft der Substanz unter Berücksichtigung einer Fehler-Kompensation zu bilden. Dies ermöglicht eine interne Redundanz des radiometrischen Messgeräts. Insbesondere kann das Bewertungsteil eine Auswahllogik aufweisen, wobei die Auswahllogik dazu ausgebildet sein kann, ein jeweiliges Sensorsignal als fehlerfreies oder fehlerhaftes Sensorsignal zu bewerten. Insbesondere kann die Mehrzahl von optoelektronischen Sensoren mindestens drei optoelektronische Sensoren aufweisen und die Auswahllogik kann dazu ausgebildet sein, die Sensorsignale miteinander zu vergleichen und in Abhängigkeit von einem Vergleichsergebnis ein jeweiliges Sensorsignal als fehlerfreies oder fehlerhaftes Sensorsignal zu bewerten. Insoweit sei auch auf die einschlägige Fachliteratur zur Redundanz radiometrischer Messgeräte verwiesen, insbesondere auf die EP 3 064 910 A1.

In einer Weiterbildung der Erfindung weist das radiometrische Messgerät ein gemeinsames Gehäuse auf. Innerhalb des gemeinsamen Gehäuses sind, insbesondere mindestens, die Mehrzahl von optoelektronischen Sensoren und die Auswerteeinheit angeordnet. Dies ermöglicht relativ günstige Kosten für das radiometrische Messgerät, insbesondere gegenüber einem Messgerät mit mehreren Gehäusen. Insbesondere kann das gemeinsame Gehäuse als ein Explosionsschutzgehäuse ausgebildet sein.

Des Weiteren bezieht sich die Erfindung auf ein radiometrisches Messsystem zum Messen der Eigenschaft der Substanz, die in dem Hohlkörper enthalten ist. Das erfindungsgemäße radiometrische Messsystem weist das radiometrische Messgerät und mindestens eine Strahlungsquelle auf.

Das radiometrische Messsystem kann die gleichen Vorteile ermöglichen wie das zuvor beschriebene radiometrische Messgerät.

Die Strahlungsquelle kann zur Anordnung im Bereich des Hohlkörpers oder am Hohlkörper ausgebildet sein. Des Weiteren kann die Strahlungsquelle dazu ausgebildet sein, Strahlung, insbesondere ionisierende Strahlung, auszusenden. Die Strahlungsquelle kann eine Gamma-Strahlungsquelle sein. Die ausgesandte Strahlung kann mit der Substanz in dem Hohlkörper wechselwirken und von der Mehrzahl von Szintillatorfasern empfangen werden. Die Szintillatorfasern können aus der empfangenen Strahlung die Lichtimpulse erzeugen.

Zusätzlich kann das radiometrische Messsystem den Hohlkörper aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes radiometrisches Messsystem mit einem erfindungsgemäßen radiometrischen Messgerät,
- Fig. 2: ein Bündel einer Mehrzahl von Szintillatorfasern und eine Mehrzahl von optoelektronischen Sensoren, die unmittelbar optisch gekoppelt sind, des Messgeräts der Fig. 1,
- Fig. 3: einen Querschnitt einer der Szintillatorfasern der Fig. 1,
- Fig. 4: einen Querschnitt einer der Sensoren der Fig. 1 und
- Fig. 5: ein weiteres Ausführungsbeispiel einer Szintillatorfaser und eines Sensors, die mittels eines Lichtleiters optisch gekoppelt sind, eines erfindungsgemäßen radiometrischen Messgeräts eines erfindungsgemäßen radiometrischen Messsystems.

### DETAILLIERTE BESCHREIBUNG DER AUSFÜHRUNGSBEISPIELE

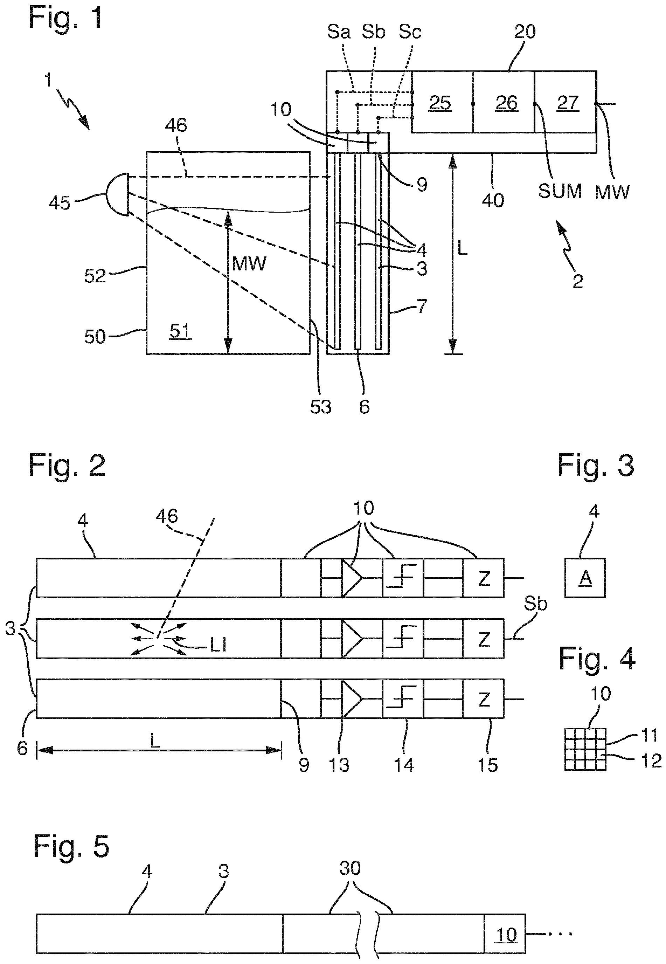

Fig. 1 zeigt ein erfindungsgemäßes radiometrisches Messsystem 1 zum Messen einer Eigenschaft MW einer Substanz 51. Die Substanz 51 ist in einem Hohlkörper 50 enthalten. Das radiometrische Messsystem 1 weist ein erfindungsgemäßes radiometrisches Messgerät 2 auf.

Das radiometrische Messgerät 2 zum Messen der Eigenschaft MW der Substanz 51, wobei die Substanz 51 in dem Hohlkörper 50 enthalten ist, weist auf: ein Bündel 3 einer Mehrzahl von Szintillatorfasern 4, eine Mehrzahl von optoelektronischen Sensoren 10 und eine Auswerteeinheit 20. Das Bündel 3 ist zur längs verlaufenden, insbesondere geraden, Anordnung der Szintillatorfasern 4 entlang des Hohlkörpers 50 ausgebildet. Im gezeigten Ausführungsbeispiel sind die Szintillatorfasern 4 am Hohlkörper 50 angeordnet und verlaufen in Fig. 1 von oben nach unten entlang des Hohlkörpers 50, insbesondere parallel zueinander. Die optoelektronischen Sensoren 10 sind mit zugehörigen Szintillatorfasern 4 des Bündels 3 optisch gekoppelt und dazu ausgebildet, einen von der optisch gekoppelten Szintillatorfaser 4 erzeugten Lichtimpuls LI in ein zugehöriges elektrisches Sensorsignal Sa, Sb, Sc umzuwandeln, wie in Fig. 2 zu erkennen. Die Auswerteeinheit 20 ist mit den optoelektronischen Sensoren 10 elektrisch gekoppelt, wie in Fig. 1 durch gepunktete Linien angedeutet, und dazu ausgebildet, die Sensorsignale Sa, Sb, Sc oder aus diesen weiterverarbeitete Signale zu einem Summensignal SUM aufzusummieren und basierend auf dem Summensignal SUM die Eigenschaft MW zu bestimmen.

Im Detail verläuft/verlaufen das Bündel 3 beziehungsweise seine Szintillatorfasern 4 entlang des Hohlkörpers über eine Länge L von mindestens 2 m. In alternativen Ausführungsbeispielen kann das Bündel zur längsverlaufenden Anordnung der Szintillatorfasern entlang des Hohlkörpers über eine Länge von mindestens 1 m ausgebildet sein.

Des Weiteren weist das radiometrische Messsystem 1 mindestens eine Strahlungsquelle 45 in Form einer Gamma-Strahlungsquelle auf. Im gezeigten Ausführungsbeispiel weist das radiometrische Messsystem 1 nur eine einzige Strahlungsquelle 45 auf. In alternativen Ausführungsbeispielen kann das radiometrische Messsystem mindestens zwei, insbesondere mindestens drei, insbesondere mindestens vier, insbesondere mindestens fünf, Strahlungsquellen aufweisen.

Im Detail ist die Strahlungsquelle 45 zur Anordnung im Bereich des Hohlkörpers 50 ausgebildet. Im gezeigten Ausführungsbeispiel ist die Strahlungsquelle 45 an einer Seite 52 des Hohlkörpers 50 angeordnet, in Fig. 1 links. Außerdem ist die Strahlungsquelle 45 dazu ausgebildet, Strahlung 46 in Form von Gamma-Strahlung auszusenden, insbesondere durch den Hohlkörper 50 mit der Substanz 51 hindurch, wie in Fig. 1 durch gestrichelte Linien angedeutet.

Im gezeigten Ausführungsbeispiel ist das Bündel 3 der Mehrzahl von Szintillatorfasern 4 an einer gegenüberliegenden Seite 53 des Hohlkörpers 50 angeordnet, in Fig. 1 rechts.

Die ausgesandte Strahlung 46 kann mit der Substanz 51 in dem Hohlkörper 50 wechselwirken und von den Szintillatorfasern 4 empfangen werden. Die Szintillatorfasern 4 können aus der empfangenen Strahlung 46 die Lichtimpulse LI erzeugen, wie in Fig. 2 zu erkennen.

Im gezeigten Ausführungsbeispiel ist die Eigenschaft MW der Substanz 51 ein Füllstand der Substanz 51 in dem Hohlkörper 50.

Im Detail weist die Auswerteeinheit 20 eine Summationseinheit 26 auf, die dazu ausgebildet ist, die Sensorsignale Sa, Sb, Sc oder aus diesen weiterverarbeitete Signale zu dem Summensignal SUM aufzusummieren. Weiter weist die Auswerteeinheit 20 eine Umrechnungseinheit 27 auf, die dazu ausgebildet ist, basierend auf dem Summensignal SUM die Eigenschaft MW zu bestimmen, insbesondere das Summensignal SUM in die Eigenschaft MW beziehungsweise einen Wert oder einen Betrag der Eigenschaft MW umzurechnen, im gezeigten Ausführungsbeispiel Füllstand.

Im gezeigten Ausführungsbeispiel weist das radiometrische Messgerät 2 nur ein einziges Bündel 3 auf. In alternativen Ausführungsbeispielen kann das Messgerät mindestens zwei, insbesondere mindestens drei, Bündel aufweisen.

Zudem weist das radiometrische Messgerät 2 mindestens ein mechanisches Bindeelement 7 auf. Im gezeigten Ausführungsbeispiel weist das Messgerät 2 nur ein einziges Bindeelement 7 in Form eines Schlauchs auf. In alternativen Ausführungsbeispielen kann das Messgerät mindestens zwei, insbesondere mindestens drei, mechanische Bindeelemente aufweisen. Das mindestens eine mechanische Bindeelement 7 bindet die Mehrzahl von Szintillatorfasern 4 zu dem Bündel 3 mechanisch zusammen.

Im Detail weist das Bündel 3 der Mehrzahl von Szintillatorfasern 4 mindestens 400 Szintillatorfasern 4 auf, wobei in Fig. 1 und 2 nur drei Szintillatorfasern 4 gezeigt sind. In alternativen Ausführungsbeispielen kann das Bündel der Mehrzahl von Szintillatorfasern mindestens 50 Szintillatorfasern aufweisen.

Des Weiteren weist die Mehrzahl von optoelektronischen Sensoren 10 mindestens 400 optoelektronische Sensoren 10 auf, wobei in Fig. 1 und 2 nur drei Sensoren 10 gezeigt sind. In alternativen Ausführungsbeispielen kann die Mehrzahl von Sensoren mindestens 50 Sensoren aufweisen.

Im Detail ist jeder der optoelektronischen Sensoren 10 mit nur einer einzigen der Szintillatorfasern 4 des Bündels 3 optisch gekoppelt beziehungsweise jede der Szintillatorfasern 4 ist mit nur einem einzigen der Sensoren 10 gekoppelt. In anderen Worten: die Mehrzahl von Szintillatorfasern 4 entspricht beziehungsweise gleicht der Mehrzahl von Sensoren 10.

Mindestens eine, insbesondere alle, der Szintillatorfasern 4 weist/weisen jeweils eine Querschnittsfläche A, wie in Fig. 3 gezeigt, von maximal 1 mm² auf. In alternativen Ausführungsbeispielen kann mindestens eine der Szintillatorfasern eine Querschnittsfläche von maximal 5 mm² aufweisen. Im gezeigten Ausführungsbeispiel weist die Querschnittsfläche A eine eckige, insbesondere quadratische, Form auf. In alternativen Ausführungsbeispielen kann die Querschnittsfläche eine runde, insbesondere eine kreisrunde, Form aufweisen. Im gezeigten Ausführungsbeispiel ist eine Querschnittsfläche eines zugehörigen optoelektronischen Sensors 10 an die Querschnittsfläche A der Szintillatorfaser 4 angepasst, wie in Fig. 2 und 4 zu erkennen.

Mindestens eine, insbesondere alle, der Szintillatorfasern 4 weisen Polyvinyltoluen und/oder Polystyren auf.

Wie in Fig. 2 zu erkennen, wechselwirkt die Strahlung 46 in Form eines einzelnen Gamma-Quants mit einer der Szintillatorfasern 4, die infolgedessen den Lichtimpuls LI erzeugt. Das Licht bleibt in dieser Szintillatorfaser 4 und wird über Totalreflexion an deren Enden 6, 9 geleitet.

Mindestens eine, insbesondere alle, der Szintillatorfasern 4 ist/sind jeweils an einem Ende 6 verspiegelt. Jeweils an einem anderen, gegenüberliegenden Ende 9 ist der zugehörige optoelektronische Sensor 10 mit der Szintillatorfaser 4 optisch gekoppelt.

Im Ausführungsbeispiel der Fig. 1 und 2 ist mindestens einer, insbesondere sind alle, der Sensoren 10 unmittelbar mit einer der Szintillatorfasern 4 des Bündels 3 optisch gekoppelt.

In einem anderen Ausführungsbeispiel, das in Fig. 5 gezeigt ist, weist das radiometrische Messgerät 2 mindestens einen Lichtleiter 30 auf. Einer der optoelektronischen Sensoren 10 ist mittels des Lichtleiters 30 mit einer der Szintillatorfasern 4 des Bündels 3 optisch gekoppelt.

Mindestens einer, insbesondere alle, der optoelektronischen Sensoren 10 weist/weisen jeweils ein Array 11 von Photodioden 12 in Form eines SiPM auf, wie in Fig. 4 zu erkennen. Im gezeigten Ausführungsbeispiel weist das Array 11 sechzehn Photodioden 12 auf. In alternativen Ausführungsbeispielen kann das Array mindestens 4 Photodioden aufweisen, insbesondere mindestens 10, insbesondere mindestens 50, insbesondere mindestens 100.

Außerdem sind die optoelektronischen Sensoren 10 dazu ausgebildet, den von der optisch gekoppelten Szintillatorfaser 4 erzeugten Lichtimpuls LI in ein zugehöriges digitales elektrisches Sensorsignal Sa, Sb, Sc in Form einer Zählrate umzuwandeln. Im Detail weist der Sensor 10 eine Sensorelektronik auf. Die Sensorelektronik weist einen Verstärker 13, einen Diskriminator 14 und einen Zähler 15 auf. In alternativen Ausführungsbeispielen kann das elektrische Sensorsignal ein analoges elektrisches Sensorsignal beispielsweise in Form eines Spannungspulses sein.

Im gezeigten Ausführungsbeispiel ist die Auswerteeinheit 20 beziehungsweise ihre Summationseinheit 26 dazu ausgebildet, die digitalen elektrischen Sensorsignale Sa, Sb, Sc digital aufzusummieren, insbesondere zu einer Gesamtzählrate.

Weiter weist die Auswerteeinheit 20 eine Bewertungseinheit 25 auf. Die Bewertungseinheit 25 ist dazu ausgebildet, ein jeweiliges Sensorsignal Sa, Sb, Sc oder ein daraus weiterverarbeitetes Signal als fehlerfrei oder fehlerhaft zu bewerten. Des Weiteren ist die Auswerteeinheit 20 beziehungsweise ihre Summationseinheit 26 dazu ausgebildet, die fehlerfreien Sensorsignale Sa, Sb, Sc oder aus diesen weiterverarbeitete fehlerfreie Signale zu dem Summensignal SUM aufzusummieren. Außerdem ist die Auswerteeinheit 20 beziehungsweise ihre Summationseinheit 26 und/oder ihre Umrechnungseinheit 27 dazu ausgebildet, die Eigenschaft MW der Substanz 51 unter Berücksichtigung einer Fehler-Kompensation zu bilden.

Zudem weist das radiometrische Messgerät 2 ein gemeinsames Gehäuse 40 in Form eines Explosionsschutzgehäuses auf. Innerhalb des gemeinsamen Gehäuses 40 sind die Mehrzahl von optoelektronischen Sensoren 10 und die Auswerteeinheit 20 angeordnet.

Wie die gezeigten und oben erläuterten Ausführungsbeispiele deutlich machen, stellt die Erfindung ein vorteilhaftes radiometrisches Messgerät bereit, das gegenüber dem Stand der Technik verbesserte Eigenschaften aufweist, insbesondere einfach zu transportieren und zu montieren ist und gleichzeitig eine hohe Messempfindlichkeit und einen langen Messbereich aufweist, sowie ein radiometrisches Messsystem mit einem solchen radiometrischen Messgerät.

## Patentansprüche

1. Radiometrisches Messgerät (2) zum Messen einer Eigenschaft (MW) einer Substanz (51), wobei die Substanz (51) in einem Hohlkörper (50) enthalten ist, das radiometrische Messgerät (2) aufweisend:
- ein Bündel (3) einer Mehrzahl von Szintillatorfasern (4), wobei das Bündel (3) zur längsverlaufenden Anordnung der Szintillatorfasern (4) entlang des Hohlkörpers (50) ausgebildet ist,
- eine Mehrzahl von optoelektronischen Sensoren (10), wobei die optoelektronischen Sensoren (10) mit zugehörigen Szintillatorfasern (4) des Bündels (3) optisch gekoppelt sind und dazu ausgebildet sind, einen von der optisch gekoppelten Szintillatorfaser (4) erzeugten Lichtimpuls (LI) in ein zugehöriges elektrisches Sensorsignal (Sa, Sb, Sc) umzuwandeln, und
- eine Auswerteeinheit (20), wobei die Auswerteeinheit (20) mit den optoelektronischen Sensoren (10) elektrisch gekoppelt ist und dazu ausgebildet ist, die Sensorsignale (Sa, Sb, Sc) oder aus diesen weiterverarbeitete Signale zu einem Summensignal (SUM) aufzusummieren und basierend auf dem Summensignal (SUM) die Eigenschaft (MW) zu bestimmen.

2. Radiometrisches Messgerät (2) nach Anspruch 1,
- wobei das Bündel (3) zur längsverlaufenden Anordnung der Szintillatorfasern (4) entlang des Hohlkörpers (50) über eine Länge (L) von mindestens 1 m ausgebildet ist.

3. Radiometrisches Messgerät (2) nach einem der vorhergehenden Ansprüche,
- wobei die optoelektronischen Sensoren (10) dazu ausgebildet sind, den von der optisch gekoppelten Szintillatorfaser (4) erzeugten Lichtimpuls (LI) in ein zugehöriges digitales elektrisches Sensorsignal (Sa, Sb, Sc) umzuwandeln.

4. Radiometrisches Messgerät (2) nach einem der vorhergehenden Ansprüche,
- wobei mindestens einer der optoelektronischen Sensoren (10) ein Array (11) von Photodioden (12) aufweist.

5. Radiometrisches Messgerät (2) nach einem der vorhergehenden Ansprüche,
- wobei mindestens eine der Szintillatorfasern (4) eine Querschnittsfläche (A) von maximal 5 mm² aufweist.

6. Radiometrisches Messgerät (2) nach einem der vorhergehenden Ansprüche,
- wobei mindestens eine der Szintillatorfasern (4) Polyvinyltoluen (PVT) und/oder Polystyren (PS) aufweist.

7. Radiometrisches Messgerät (2) nach einem der vorhergehenden Ansprüche,
- wobei das Bündel (3) der Mehrzahl von Szintillatorfasern (4) mindestens 50 Szintillatorfasern (4) aufweist und/oder
- wobei die Mehrzahl von optoelektronischen Sensoren (10) mindestens 50 optoelektronische Sensoren (10) aufweist.

8. Radiometrisches Messgerät (2) nach einem der vorhergehenden Ansprüche,
- wobei jeder der optoelektronischen Sensoren (10) mit nur einer einzigen der Szintillatorfasern (4) des Bündels (3) optisch gekoppelt ist.

9. Radiometrisches Messgerät (2) nach einem der vorhergehenden Ansprüche,
- wobei mindestens einer der optoelektronischen Sensoren (10) unmittelbar mit einer der Szintillatorfasern (4) des Bündels (3) optisch gekoppelt ist.

10. Radiometrisches Messgerät (2) nach einem der vorhergehenden Ansprüche, aufweisend:
- mindestens einen Lichtleiter (30), wobei einer der optoelektronischen Sensoren (10) mittels des Lichtleiters (30) mit einer der Szintillatorfasern (4) des Bündels (3) optisch gekoppelt ist.

11. Radiometrisches Messgerät (2) nach einem der vorhergehenden Ansprüche,
- wobei mindestens eine der Szintillatorfasern (4) an einem Ende (6) verspiegelt ist.

12. Radiometrisches Messgerät (2) nach einem der vorhergehenden Ansprüche, aufweisend:
- mindestens ein mechanisches Bindeelement (7), wobei das mindestens eine mechanische Bindeelement (7) die Mehrzahl von Szintillatorfasern (4) zu dem Bündel (3) mechanisch zusammenbindet.

13. Radiometrisches Messgerät (2) nach einem der vorhergehenden Ansprüche, wobei die Auswerteeinheit (20)
- eine Bewertungseinheit (25) aufweist, wobei die Bewertungseinheit (25) dazu ausgebildet ist, ein jeweiliges Sensorsignal (Sa, Sb, Sc) oder ein daraus weiterverarbeitetes Signal als fehlerfrei oder fehlerhaft zu bewerten, und
- dazu ausgebildet ist, die fehlerfreien Sensorsignale (Sa, Sb, Sc) oder aus diesen weiterverarbeitete fehlerfreie Signale zu dem Summensignal (SUM) aufzusummieren und die Eigenschaft (MW) der Substanz (51) unter Berücksichtigung einer Fehler-Kompensation zu bilden.

14. Radiometrisches Messgerät (2) nach einem der vorhergehenden Ansprüche, aufweisend:
- ein gemeinsames Gehäuse (40), wobei innerhalb des gemeinsamen Gehäuses (40) die Mehrzahl von optoelektronischen Sensoren (10) und die Auswerteeinheit (20) angeordnet sind.

15. Radiometrisches Messsystem (1) zum Messen einer Eigenschaft (MW) einer Substanz (51), die in einem Hohlkörper (50) enthalten ist, das radiometrische Messsystem (1) aufweisend:
- ein radiometrisches Messgerät (2) nach einem der vorhergehenden Ansprüche und
- mindestens eine Strahlungsquelle (45).
